# EUROPEAN PATENT SPECIFICATION

(11) **EP 4 186 366 B1**
(45) Date of publication and mention of the grant of the patent: **08.10.2025**
(21) Application number: 23150218.8
(22) Date of filing: 07.12.2017
(51) Int. Cl.: A01N 37/18, A01N 43/40, A01N 43/86, A01N 47/40, A01N 51/00, A01P 7/04

(54) **TREATMENT FOR REMOVING ECTOPARASITES FROM FISH**
VERFAHREN ZUR ENTFERNUNG VON EKTOPARASITEN AUS FISCH
TRAITEMENT D'ÉLIMINATION D'ECTOPARASITES DES POISSONS

(30) Priority: 08.12.2016 NO 20161951
(43) Date of publication of application: 31.05.2023
(62) Divisional of application: 17811302.3
(73) Proprietor: Benchmark Animal Health Limited, BN99 3HH (GB)
(72) Inventor: MARSHALL, John, Royston, SG8 6RA (GB); LONGSHAW, Matthew, Portland, DT5 2DP (GB); HAZLETT, Elizabeth, Edinburgh, EH5 3AU (GB)
(74) Representative: Murgitroyd & Company

(56) References cited:
- WO-A1-2015/198247
- US-A1- 2015 272 931

## Description

The present invention relates to a neonicotinoid for use in removing ectoparasites from a fish in water.

Ectoparasite infestation in aquaculture is a significant commercial concern. Additionally, an infestation in farmed fish can affect wild fish stocks. However, the number of commercially-viable treatments is limited, for example, due to concerns related to releasing chemotherapeutic agents into the environment and the ectoparasites developing resistance or other reduction in sensitivity to the agents.

Neonicotinoids are a class of neuroactive insecticides chemically similar to nicotine. The neonicotinoid family includes acetamiprid, clothianidin, imidacloprid, nitenpyram, nithiazine, thiacloprid and thiamethoxam. Compared to organophosphate and carbamate insecticides neonicotinoids cause less toxicity in birds and mammals than insects.

EP0590425 relates very broadly to a method of combatting fish parasites by administering to the fish an agonist or antagonist of nicotinergic acetylcholine receptors. The only example in EP0590425 tests the *in vitro* activity of imidacloprid at 1 ppm or 100 ppm against isolated sea lice in a water bath. However, EP0590425 provides no guidance on a suitable dose for use *in vivo* against isolated sea lice on a fish in a non-laboratory, commercial environment.

Indeed, development of a commercially-viable treatment that relies on water immersion administration has been challenging in view of environmental and safety concerns. In particular, it has been considered important to minimise the release of neonicotinoids into the environment in general, due to their perceived negative impact in particular on terrestrial insects.

WO2009/010755 proposes combination treatments comprising a carbamate or a organophosphate, a pyrethroid or pyrethrin, and optionally another biocide selected from the following classes of molecules: chloronicotinyl; phenylpyrazole; oxadiazine; pyrazole; or organochlorine. However, no working examples of fish treatment are disclosed.

WO2010/109187 proposes combination treatments comprising a pyrethroid, an organophosphate and optionally another biocide selected from the following classes of molecules: chloronicotinyl; phenylpyrazole; oxadiazine; pyrazole; or organochlorine. However, no working examples of fish treatment are disclosed.

US2015/0272931 relates to the use of clothianidin for controlling sea lice in a fish population, primarily comprising feeding an in-feed formulation comprising clothianidin to the fish population according to a specific regime. WO2015/198247 relates to use of a medicated fish feed for preventing or treating parasite infection in fish, the medicated fish feed comprising fish feed granules or pellets coated with a composition comprising a neonicotinoid and a carrier having a high apparent digestibility coefficient.

There therefore remains a need for a commercially-viable, immersion treatment for ectoparasites in fish that can take into account safety, environmental and treatment-resistance issues.

Accordingly, an aspect of the invention provides a neonicotinoid for use in removing ectoparasites from a fish, the water comprising the removed ectoparasites is exchanged with replacement water, thereby separating the removed ectoparasites and the fish, wherein the ectoparasites are sea lice, and wherein the neonicotinoid is not configured or formulated for in-feed administration.

In embodiments of the invention, the neonicotinoid is administered to the fish at a concentration of 1 - 500 ppm, 1 - 200 ppm, 20 - 200 ppm, 1 - 64 ppm, 10 - 64 ppm, 10 - 50 ppm, 50 ppm or more, 100 ppm or more, or 200 ppm or more w/v.

In embodiments of the invention, the fish is a salmon, trout, char, or cleaner fish.

In embodiments of the invention, the neonicotinoid is applied at a sublethal dose and/or for a sublethal time.

In embodiments of the invention, the neonicotinoid is the only ectoparasiticide administered.

**In** embodiments of the invention, the neonicotinoid is imidacloprid, clothianidin, acetamiprid, nitenpyram, nithiazine, thiacloprid or thiamethoxam, or the pharmaceutically effective salts or esters thereof.

**In** embodiments of the invention, after the water is exchanged, the release of the removed ectoparasites into the environment is prevented.

**In** embodiments of the invention, preventing release of the removed ectoparasites comprises collecting the ectoparasites from a sample of water comprising the removed ectoparasites.

Embodiments of the invention further comprise killing removed ectoparasites that remain alive, after optionally concentrating the ectoparasites.

Another aspect of the invention provides a composition for use in treating an ectoparasite infestation in a fish comprising one or more ectoparasiticides, wherein one of the one or more ectoparasiticides is the neonicotinoid for use according to the invention.

**In** embodiments of the invention, the composition comprises only one ectoparasiticide.

The present invention is defined in the appended claims. Further disclosure is provided for information purposes only.

The inventors have found that the neonicotinoid is more effective against ectoparasites in a motile stage of its life cycle. Therefore, in embodiments of the invention, the ectoparasite is in a motile lifecycle stage. According to the disclosure, the ectoparasite is in a non-motile lifecycle stage. Within a population of the ectoparasites, the ectoparasites may be in both motile and non-motile lifecycle stages. Thus, the treatment may be effective against both motile and non-motile lifecycle stages.

According to the disclosure, the neonicotinoid may be administered to the fish at a concentration of 1 - 500 ppm, 1 - 200 ppm, 20 - 200 ppm, 1 - 64 ppm, 10 - 64 ppm, 10 - 50 ppm, 50 ppm or more, 100 ppm or more, or 200 ppm or more w/v.

For example, the neonicotinoid may be administered to the fish at a concentration of 1, 2, 5, 10, 15, 20, 25, 30, 50, 64, 100, 200 or 500 ppm w/v.

Typically, the neonicotinoid is administered to the fish at a concentration of 15 ppm w/v, or 20 ppm w/v.

In particular examples, the neonicotinoid is administered to the fish at a concentration of 100 ppm w/v or more for 5 - 15 minutes, preferably concentration of 200 ppm w/v or more for 5 - 15 minutes.

Thus, the neonicotinoid provides a safe and effective means to remove ectoparasites from fish in the field, which may be for example a well boat.

The well boat environment presents a unique challenge in that space and time is limited for treatment, and there are additional risks relating to ensuring that treated sea lice are not released into the environment. Despite these challenges, the present invention advantageously successfully treats sea lice in the field and, for example, avoids the need for a well boat to travel back to shore, or have its water pumped off-board to another vessel for processing or transport to shore, for removal of the sea lice from the treatment water.

The present invention may be suitable used or carried out in any contained area, which avoids release of ectoparasiticides or removed sea lice into the environment. The invention may be carried out on a well boat.

Surprisingly, the inventors have found that the use of neonicotinoid is more effective at removing ectoparasites than azamethiphos or deltamethrin.

The neonicotinoid is believed to be effective against all ectoparasites. However, in the invention, the ectoparasite is a sea louse. In particular embodiments, the sea louse is *Lepeophtheirus salmonis.* In particular embodiments the sea louse is a *Caligus* species, such as *C. elongatus* or *C. rogercresseyi.*

The neonicotinoid is believed to be effective against ectoparasite infestation of all fish. In an embodiment of the invention, the fish is a salmon, a trout, a char, or a cleaner fish.

In all aspects and embodiments of the present invention described herein, the term "cleaner fish" refers to species of fish that provide a service to other fish species by removing undesirable matter such as dead skin and/or ectoparasites. In any embodiment of the invention, the cleaner fish may be one or more selected from the group consisting of: lumpfish/lumpsucker (*Cyclopterus lumpus*); wrasse of the family Labridae; cunner (*Tautogolabrus adspersus*); and patagonian blennie (*Eleginops maclovinus*). The wrasse of the family Labridae may be one or more selected from the group consisting of: ballan wrasse *(Labrus bergylta*); corkwing wrasse (*Symphodus melops*); rock cook wrasse (*Centrolabrus exoletus*); goldsinny wrasse (*Ctenolabrus rupestris*); and cuckoo wrasse *(Labrus mixtus).* In particular embodiments of the invention the cleaner fish is a lumpfish or a wrasse.

In a particular embodiment of the invention, the neonicotinoid is imidacloprid, or its pharmaceutically effective salts or esters. In other embodiments of the invention, the neonicotinoid may be acetamiprid, clothianidin, nitenpyram, nithiazine, thiacloprid or thiamethoxam, or their pharmaceutically effective salts or esters.

Embodiments of the invention do not require that the ectoparasites are initially killed by the neonicotinoid. Instead, the ectoparasites are induced to release, or jump off, the fish, and each removed ectoparasite will be in one of the following states: alive; moribund; and killed. When treating fish infested with a mixed population of sea lice, which may for example have different sensitivities to the ectoparasiticides used, the population of removed sea lice are more likely to be in a mixture of two or more states. Thus, while these embodiments do not require the ectoparasites to be initially killed, some or all will be killed during the treatment. In embodiments requiring the release but not killing of ectoparasites, the neonicotinoid may be applied at a sublethal dose and/or for a sublethal time. This embodiment is advantageously useful for removing populations of ectoparasites that exhibit a degree of resistance to the ectoparasiticide, which can increase the dose require to kill the ectoparasite to levels that are impractical or too expensive to achieve. In this respect, the invention provides a solution to treatment resistance.

The neonicotinoid may be applied at a lethal dose and/or for a lethal time.

In sublethal treatments, regulatory factors and good practice may require that steps are taken to avoid releasing the removed ectoparasites into the environment. Thus, embodiments of the invention comprise a final step of preventing release of the removed ectoparasites into the environment.

The neonicotinoid may be applied at a temperature of 4 - 18°C, 4 - 16°C, 5 - 15°C, 10 - 14°C or 12 - 14°C.

Also disclosed is a composition for use in treating an ectoparasite infestation in a fish comprising one or more ectoparasiticides, wherein one of the one or more ectoparasiticides is the neonicotinoid for use according to the present invention.

The composition may comprise one ectoparasiticide. That is, the composition includes only the neonicotinoid, and excludes other forms of ectoparasiticide.

Thus, for example, a composition may comprise a neonicotinoid, but exclude one or more of the agents selected from: a carbamate; a organophosphate; a pyrethroid; a pyrethrin; a chloronicotinyl; a phenylpyrazole; a oxadiazine; a pyrazole; or a organochlorine.

It is not sufficient that the neonicotinoid kills or otherwise immobilises the sea lice on the fish. Instead, the sea lice must be separated from the fish to enable collection of the sea lice, whether alive or dead, optionally for separate killing. The invention thus enables the treatment of an ectoparasite infestation without the requirement to kill the ectoparasite using a chemical treatment, but to separate the ectoparasite and fish such that the ectoparasite may be trapped. Each ectoparasite removed by the method will be in one of the following states: alive; moribund; and killed. This is particularly advantageous as treatments that kill the ectoparasites before they remove from fish require subjecting the fish to further processing to remove killed, and often as a result, tightly secured ectoparasites from the fish. In an aquaculture context, the method also provides a fish product that is relatively free, substantially free, or completely free of sea lice contamination.

Thus, the invention is advantageously useful for removing populations of ectoparasites that exhibit a degree of resistance to the ectoparasiticide, which can increase the dose require to kill the ectoparasite to levels that are impractical or too expensive to achieve. In this respect, the invention provides a solution to treatment resistance.

The neonicotinoid may be applied for a period of time sufficient for 50%, 60%, 70%, 80%, 90%, 95%, 98%, 99% or all ectoparasites to remove from the fish.

Accordingly, the appropriate effective time may be deduced. This may comprise monitoring the sea lice following administration of the neonicotinoid to assess an acceptable level of removal (e.g. percentage removal), and so deriving the dose and time period required to achieve the acceptable level of removal. These parameters can then be used when applying the method in the field without monitoring the level of removal in the knowledge that an acceptable level of removal will likely be achieved.

The neonicotinoid may be applied for 180 minutes or less, 120 minutes or less, 60 minutes or less, less than 30 minutes, less than 20 minutes, 15 minutes or less, less than 10 minutes, or 5 minutes or less.

"Sublethal" may be related to the dose and/or time of a treatment. It may be defined in respect of knowledge of the dose and/or time required to kill an ectoparasite. In some embodiments, "sublethal" is related to the dose and/or time required to kill an ectoparasite that has developed a degree of resistance to the ectoparasiticide. Thus, sublethality may be a treatment that does not kill all ectoparasites in a population, optionally at temperatures of 4 - 18°C.

Thus, embodiments of the invention do not require that the ectoparasites are initially killed by the neonicotinoid, but rather they are induced to release, or jump off, the fish. This minimises use of a potentially hazardous agent in the field. Minimising the time of application is useful in the field, where the treatment enclosure may not completely isolated from the surrounding environment, and so leakage of active could occur. The concentration in such circumstances must be maintained throughout the treatment time, and so shortening the treatment time may minimise loss of agent into the environment.

The neonicotinoid may be the only ectoparasiticide administered during treatment. This is advantageous over combined treatments because combined treatments would be expected to have a greater negative environmental impact due to a greater number of non-target effects and increase the likelihood of the development of resistance.

In embodiments of the invention, after the water is exchanged, the release of the removed ectoparasites into the environment is prevented. This may take the form of collecting the ectoparasites from a sample of water comprising the removed ectoparasites.

The sample of water may be all of the water used in the invention.

The ectoparasites, whether alive, dead and/or moribund, including their egg strings where present, may be collected by passing the sample through a mesh filter. The skilled person will be able to obtain and use a suitably specified mesh filter for the application. The mesh filter may have a gap size of at least 30 µm, at least 60 µm or at least 150 µm, for example around 150, 60 or 30 µm. By way of example, a suitable mesh filter for sea lice would have a gap size of around 150 µm.

Embodiments of the invention may further comprise collecting removed ectoparasites, optionally concentrating the ectoparasites, and killing any parasites that remain alive. This is advantageous to ensure the ectoparasites are dead where the neonicotinoid is presumed to kill the ectoparasites, or where the neonicotinoid dosage regime is known to not kill, but merely remove, the ectoparasite. This helps avoid causing issues in respect of desensitisation of the ectoparasite or ectoparasite population to the neonicotinoid. The killing of any parasites that remain alive may be achieved by any suitable means, such as mechanical or chemical means, typically by applying an ectoparasiticide.

The fish, which have been treated in a contained environment such as a well boat, may be released back into the environment such as a sea pen.

The present invention will now be described by way of example with reference to the accompanying drawings in which:
Figure 1 shows the proportion of lice removed from salmon by immersion treatment with imidacloprid at five concentrations (0, 10, 15, 20 and 25 mg/l); and
Figure 2 shows a Kaplan-Meier plot of proportion of fish infected as a function of treatment duration in minutes (n = 10; t ≤ 56 minutes) with treatment at 10 mg/l and 20 mg/l of imidacloprid.

### Examples

### Example 1 - Treatment with 10, 30 and 50 ppm imidacloprid

### 1.1 Sea lice challenge

Eight flow-through treatment tanks each containing 15 fish were set up. The fish were Salmon (*Salmo salar*) having an average weight of approximately 270 g and of mixed sex. Egg strings removed from ovigerous female *Lepeophtheirus salmonis* were collected and cultured until infective copepodids were produced. Eight bottles containing approximately 330-350 copepodids were each randomly allocated to a treatment tank (to provide an average of 22 lice per fish).

In preparation for the challenge, water flows in the tanks were stopped and light levels reduced. The lice were then added to each tank and the tanks maintained in total darkness for 6 hours after which light levels were raised and the water flow resumed.

The fish were challenged with sea lice for either one week or for six weeks.

### 1.2 Treatment

### 1.2.1 Treatment after one week challenge

One week after the sea lice challenge, fish in three of the tanks were treated with either 10 ppm w/v, 30 ppm w/v or 50 ppm w/v imidacloprid. One of the tanks was treated with 0.03% DMSO and another tank sham treated with sea water as controls.

For each treatment tank, the appropriate amount of imidacloprid (see Table 1) was dissolved in 100 ml of DMSO and mixed with approximately 900 ml of sea water from the experimental tank to obtain a treatment solution. The water flow on the experimental tanks was disabled and the treatment solution was then added.

Fish were exposed for 60 minutes in static water with full aeration and observed during the exposure period. At the end of the exposure period the water was rapidly drained to approximately 1/3 volume, before the flows were resumed in the tanks.

**Table 1**

| **Group** | **Treatment type** | **Tank volume (litres)** | **Weight of imidacloprid used in treatment (g)** | **Treatment point, number of weeks post lice challenge** |
|---|---|---|---|---|
| Group 1 | Control - sea water | N/A | - | 1 week |
| Group 2 | Control - sea water/DMSO | N/A | - | 1 week |
| Group 3 | 10 ppm imidacloprid | 273.2 | 2.73 | 1 week |
| Group 4 | 30 ppm imidacloprid | 271.6 | 8.15 | 1 week |
| Group 5 | 50 ppm imidacloprid | 288.2 | 14.41 | 1 week |
| Group 6 | 10 ppm imidacloprid | 293.3 | 2.9 | 6 weeks |
| Group 7 | 30 ppm imidacloprid | 278.4 | 8.4 | 6 weeks |
| Group 8 | 50 ppm imidacloprid | 292.0 | 14.6 | 6 weeks |

### 1.2.2 Treatment after six weeks exposure

Six weeks after the fish were challenged with sea lice, the fish in the three remaining treatment tanks were treated with either 10 ppm w/v, 30 ppm w/v or 50 ppm w/v imidacloprid. The treatment was carried out in the same way as for the treatment tanks one week post challenge (see 1.2.1). The amounts of imidacloprid added to each treatment tank are shown in Table 1.

### - Observations at 50 ppm w/v

No lice were observed in the water column of the 50 ppm w/v treatment group during observations conducted between 2 and 6 minutes after addition of imidacloprid.

After 12 minutes treatment time, approximately 10 lice were observed to have detached from the host and were free in the water column. After 18 minutes treatment time, approximately 20 lice were observed in the water column. No active movements were recorded in these lice. 44 minutes after addition of imidacloprid, lice were noted as remaining inactive on the bottom of the tank. In addition, only five fish were noted as being infected, each with a single louse. 53 minutes after addition of imidacloprid, only 2-3 fish appeared to have a single louse infection. 58 minutes after addition of imidacloprid, only one louse was apparent on a single fish. 81 minutes after addition of imidacloprid, no lice were visible on the fish.

Two days post treatment it was noted that lesions previously associated with feeding and attachment of lice had almost completely resolved.

### - Observations at 30 ppm w/v

Approximately 1-2 lice were observed in the water column of the tank containing fish treated with 30 ppm w/v imidacloprid 10 minutes after addition. 18 minutes after addition, approximately 10 lice were present in the water column. 25 minutes after addition, approximately 20 lice were noted in the water and less than 6 fish appeared to be infected with an estimated 1-2 lice per fish. 33 minutes after addition of imidacloprid, most fish were considered to be negative for any lice infections. All lice off the host were immobile. 47 minutes after addition, only 3 fish appeared to be infected, each with a single louse. 59 minutes after addition of imidacloprid, no fish were visibly infected with lice. Individual lice apparently re-attached to 4 fish with 1 louse being observed on four fish at 78 minutes after addition of imidacloprid. 6 minutes later, no lice were observed on these fish and all lice in the tanks were immobile.

Two days post-treatment it was noted that lesions previously associated with feeding and attachment of lice had almost completely resolved.

### - Observations at 10 ppm w/v

Lice were not observed in the water column within the first 19 minutes after addition of imidacloprid. 21 after the addition, several lice were observed actively swimming in the water column. Four minutes later, most of these lice were immobile. 54 minutes after addition, 2 infected fish were noted, each parasitized by a single ovigerous female. 86 minutes after addition, a single female louse was observed to detach from its host. Although not directly observed, the remaining ovigerous female was noted to have detached from its host. 91 minutes after addition, a single male louse was observed on the head of its host. This louse was observed on its host for at least five days after treatment.

### 1.2.3 Termination

Eight weeks after the fish were challenged with sea lice, the study was terminated. Fish were over anaesthetised in MS222 (tricaine methanesulfonate) and pithed using an Iki Jime tool. The length and weight of each fish and external symptoms were recorded. All lice were removed from each fish and note made of sex and stage of development. The lice were stored in ethanol and sex and stage confirmed using stereo microscope.

Final lice counts were conducted blind and the results are shown in Table 2. The data is expressed as prevalence and abundance. Prevalence is defined as the number of hosts infected with one of more individuals of a parasite species divided by the number of hosts examined (including infected and uninfected hosts) and expressed as a percentage.

**Table 2**

| **Treatment** | **Prevalence** | **Abundance (and range) of adult male lice** | **Abundance (and range) of adult female lice** | **Abundance (and range) of ovigerous females** | **Mean abundance (and range) or all lice stages** |
|---|---|---|---|---|---|
| DMSO control | 100 | 1.2 (0-4) | 0 (0-0) | 1.47 (0-4) | 2.67 (1-6) |
| Sea water control | 93.33 | 2 (0-7) | 0.067 (0-1) | 1.8 (0-6) | 3.87 (0-11) |
| 1 week challenge + 10 ppm imidacloprid | 100 | 0.87 (0-2) | 0.067 (0-1) | 1.47 (0-3) | 2.4 (1-5) |
| 1 week challenge + 30 ppm imidacloprid | 93.33 | 0.8 (0-1) | 0 (0-0) | 1.4 (0-3) | 2.2 (0-4) |
| 1 week challenge + 50 ppm imidacloprid* | 100 | 1.23 (0-3) | 0 (0-0) | 1.69 (0-5) | 2.92 (0-7) |
| 6 week challenge + 10 ppm imidacloprid | 0 | 0 | 0 | 0 | 0 |
| 6 week challenge + 30 ppm imidacloprid | 0 | 0 | 0 | 0 | 0 |
| 6 week challenge + 50 ppm imidacloprid | 0 | 0 | 0 | 0 | 0 |

| | | | | | |
|---|---|---|---|---|---|
| *Two fish were removed from this treatment group. Fish 1: Fork length 316mm, total weight 452g. 3 adult males and 6 adult females recovered. Fish 2: Fork length 290mm, total weight 379g. 1 adult male and 1 adult female recovered. | | | | | |

Prevalence of infection of all lice stages on the fish examined in week 8 were not considered to differ between the two control groups and in the fish treated with either 10, 30 or 50ppm w/v of imidacloprid one week post challenge. However, as reported above, no lice were recovered from the fish treated with 10, 30 or 50ppm w/v of imidacloprid six weeks after sea lice challenge. The treatment was considered to be 100% effective at all treatment doses against motile parasitic stages of lice.

No significant differences in overall lice abundances were observed in fish treated one week post challenge compared with the DMSO control; a minor difference in lice abundance was apparent when compared with sea water controls - this was not considered significant. Similarly, limited differences between abundance of male lice recovered from fish treated one week post challenge and control groups were observed. No significant differences were noted in abundance of ovigerous females from fish treated at one week post challenge and the control groups.

### Example 2 - Optimisation of treatment concentration

### 2.1 Sea lice challenge

120 salmon fish (*Salmo salar*) were divided across five flow-through treatment tanks and acclimated for 24 hours prior to parasite challenge.

Egg strings removed from ovigerous female *Lepeophtheirus salmonis* were collected and cultured until infective copepodids were produced. The copepodids were then evenly distributed into five bottles containing sea water and stored at ~10°C overnight. **In** preparation for the challenge, water flows in the treatment tanks were stopped and light levels reduced. 650 ±20 copepodids (~27 per host) were added to the static water and the tanks maintained in total darkness for 7 hours after which light levels were raised and the water flow resumed.

### 2.2 Relative efficacy study

Fish were randomly divided into ten groups of ten fish and held in static 'treatment buckets' containing 30 L of water and high aeration as shown in Table 3.

**Table 3**

| **Group** | **Concentration of imidacloprid (mg/l)** | **Duration of treatment (minutes)** | **No. of replicates** | **Total number of fish/rep** |
|---|---|---|---|---|
| 1 & 2 | 0 | 60 | 2 | 10 |
| 3 & 4 | 10 | 60 | 2 | 10 |
| 5 & 6 | 15 | 60 | 2 | 10 |
| 7 & 8 | 20 | 60 | 2 | 10 |
| 9 & 10 | 25 | 60 | 2 | 10 |

Eight of the groups (3-10) were treated with the required concentrations of imidacloprid for 60 minutes: imidacloprid was dissolved in DMSO and added to ~1L of tank water prior to addition to the treatment buckets. The remaining group and its replicate (1 & 2) were DMSO controls at 0.03%.

Experimental animals were monitored closely for adverse reactions and the status of the parasite infection. Where possible the time at which all parasites were thought to have detached was recorded. As treatments were performed in static systems, temperature and dissolved oxygen were regularly monitored throughout the procedure and aeration adjusted as required.

After the treatment period, the test animals were removed from the treatment solution and humanly euthanised. Each fish was weighed, measured, and its individual parasite burden assessed. The number of parasites in the treatment solution was also counted and qualitatively assessed for: sex and maturity, apparent signs of neonicotinoid poisoning, and/or potential recovery.

### - Results

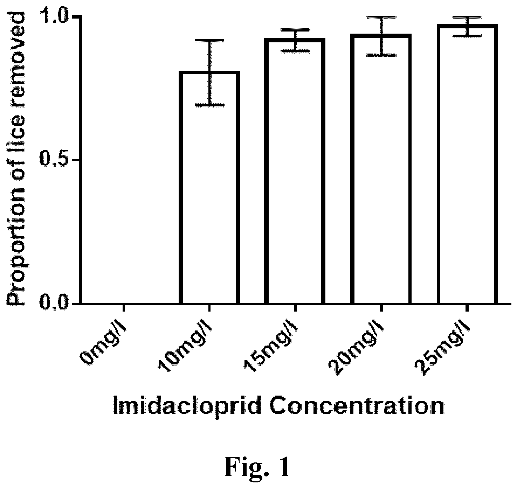

The total proportion of lice removed at the four treatment concentrations 10, 15, 20 and 25 mg/l of imidacloprid combined with a DMSO concentration of 0.03% is shown in Table 4 and Figure 1 (n = 2, t = 60 minutes, error bars indicate ±SEM).

**Table 4**

| **Group** | **Concentration imidacloprid (mg/l)** | **Replicate** | **First fish out (min post imidacloprid added)** | **Last fish out (post imidacloprid added)** | **Estimated total parasite clearance (min post imidacloprid added)** |
|---|---|---|---|---|---|
| 1 | 0 | 1 | 60 | 65 | n/a |
| 2 | 0 | 2 | 60 | 65 | n/a |
| 3 | 10 | 1 | 60 | 65 | n/a |
| 4 | 10 | 2 | 60 | 65 | 46 |
| 5 | 15 | 1 | 58 | 64 | 33 |
| 6 | 15 | 2 | 60 | 66 | 43 |
| 7 | 20 | 1 | 59 | 64 | 32 |
| 8 | 20 | 2 | 60 | 65 | 38 |
| 9 | 25 | 1 | 60 | 66 | 31 |
| 10 | 25 | 2 | 60 | 66 | 22 |

All four treatment dosages removed 80-100% of the parasite infection during a 60 minute treatment.

Logistic regression was used to compare parasite clearance after treatment with each of the concentration. Logistic regression analyses were performed using the glm function in R v.2.13.0 and assumed a binomial or quasi-binomial error distribution (determined through the comparison of the null deviance with the degrees of freedom).

Parasite clearance at all treatment concentrations was determined to be significantly greater than that of 0 mg/l (p<0.01). Although clearance was significantly greater at 25 mg/l (97 ±3%) than at 10 mg/l (80 ±11%) (p<0.05), no significant difference in efficacy could be determined between concentrations equal to or greater than 15 mg/l (92 ±4%) (p>0.4). Parasite clearance when host animals were treated with 20 mg/l was 92 ±7%. In summary, imidacloprid effectively removed *L. salmonis* from its host at all concentrations tested.

### 2.3 Rate determination study

It was observed that sea lice exposed to 10 mg/l imidacloprid appeared to take longer to fall off the host when compared to those exposed with 30 mg/l.

In order to quantify the relationship between concentration and time to effect, twenty host animals were randomly allocated to a treatment concentration of either 10 or 20 mg/l imidacloprid (10 fish per concentration). The logistics of the rate determination study were essentially the same as the relative efficacy study, with the exception that fish were removed from the treatment solution and euthanised as soon as total parasite clearance had occurred thereby minimising time under procedure and associated welfare concerns.

### - Results

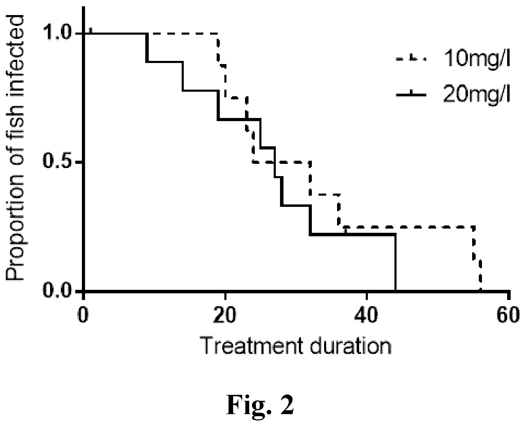

Treatment with 10 mg/l and 20 mg/l of imidacloprid resulted in total parasite clearance from the hosts. The experimental animals were closely monitored throughout the procedure and the time to total clearance was recorded to the nearest minute. This event represented the experimental endpoint and the animals were removed and euthanised at this time. Survival analysis was used to determine whether the time to parasite clearance was significantly different between 10 mg/l and 20 mg/l. Figure 2 visually represents the rates as a Kaplan-Meier graph and Mantel-Cox (log-rank test) determines that there is no significant difference between them (p = 0.48, n = 10, t ≤ 56 minutes). The results show that the concentration of imidacloprid has no impact on the time to parasite clearance and estimates a lethal time 50% (LT50) for both concentrations of ~27.5 minutes.

This study determined 15 mg/l to be the optimum concentration within the range tested; no statistically significant increase in efficacy was observed above this concentration. Additionally, no relationship between concentration and time to effect could be established i.e. the probability of total parasite clearance for an individual host at any time point (≤ 56 minutes) was not significantly different at either 10 or 20 mg/l imidacloprid.

### 2.4 Sea lice recovery

At the sampling point for the relative efficacy study (see 2.2), a number of parasites remained attached to their hosts (20% of those exposed to 10 mg/l, 8% of those exposed to 15 and 20 mg/l, and 3% of those exposed to 25 mg/l).

Imidacloprid exposed parasites from both the relative efficacy and rate determination studies (both those removed manually from their host post-treatment and those that detached during treatment) were immersed into clean seawater and observed for signs of recovery.

At the time of the first observation, exposed individuals were determined to be either dead or still active. Of those still active, muscular excitation was uncoordinated, uncontrolled and limited. These individuals were clearly incapable of carrying out their basic functions (attachment to host and targeted movement) suggesting that the parasites which remained attached to their host after treatment may have subsequently detached downstream.

During the post-exposure period (up to 6 hours) no clear signs of functional recovery were noted in any of the parasites exposed to imidacloprid at any concentration.

### Example 3 - Treatment of sea lice infestation in well boat

Salmon to be treated were crowded in a standard aquaculture cage then pumped into an oxygenated well of a well boat to a density of fish in each well of 90 or 120 kg per cubic meter of water. Premixed imidacloprid was added to the well to a dosage of 20 ppm w/v. The fish were then treated for a period of 60 minutes. At the end of the treatment period, the fish were pumped from the well and de-watered to ensure that the treated water is returned to the well. To do this, the fish were passed over a grid or grading bars and also rinsed with untreated sea water to remove any treatment water residue from the outside of the fish before its return to the sea pen. All rinsing water was retained after use.

The water was passed through a mesh filter with a mesh size of around 50 µm or around 150 µm to remove organic matter, including moribund and dead sea lice and their egg strings.

### Example 4 - Treatment of L. salmonis and Caligus species of sea lice in the field

The effectiveness of imidacloprid against pre-adult and adult stages of *L. salmonis* and *Caligus* sp. infections on farmed Atlantic salmon was investigated by performing pre- and post-treatment sea lice counts on salmon undergoing a treatment with imidacloprid. This trial was conducted at a commercial salmon farm in Norway. The salmon were pumped onto a well boat and were exposed to 20 ppm imidacloprid for 60 minutes. The average weight of the salmon was 3.5 kg and the average number of salmon per pen was 180,000. 30 fish per pen were assessed for *L. salmonis* and *Caligus* sp., and the number of each *L. salmonis* life stage found was recorded. This was performed within 24 hours prior to treatment, and within 24 hours after treatment.

These assessments were made on four pens of salmon in total. Prior to treatment, fish were crowded within the pen to enable them to be pumped into the well boat, which is where the pre-treatment sea lice assessments were conducted. The post-treatment sea lice assessments were made by removing fish from the outflow pipe on the well boat.

At all time points, 3 fish were removed and placed into an anaesthetic bath. This was repeated 10 times until 30 fish had been assessed.

The numbers of sea lice observed per fish for this trial for each of the four tested pens according to sea lice life cycle state, pre- or post-administration of active are presented in Table 5. All fish were observed throughout treatment with no adverse behaviours seen.

**Table 5 - pre- vs post-treatment sea lice counts**

| | **Pen A** | | **Pen B** | | **Pen C** | | **Pen D** | |
|---|---|---|---|---|---|---|---|---|
| **Stage** | **Pre** | **Post** | **Pre** | **Post** | **Pre** | **Post** | **Pre** | **Post** |
| Chalimus | 1.2 | 0.5 | 0.2 | 0.0 | 0.1 | 0.0 | 0.0 | 0.0 |
| Pre-Adult Male | 1.8 | 0.0 | 0.4 | 0.0 | 0.0 | 0.0 | 0.0 | 0.0 |
| Pre-Adult Female | 1.9 | 0.0 | 1.1 | 0.0 | 0.4 | 0.0 | 0.6 | 0.0 |
| Adult Male | 0.9 | 0.0 | 1.0 | 0.0 | 1.7 | 0.0 | 0.8 | 0.0 |
| Adult Female | 2.0 | 0.0 | 0.8 | 0.0 | 1.0 | 0.0 | 0.8 | 0.0 |
| Gravid Female | 0.5 | 0.0 | 0.4 | 0.0 | 0.4 | 0.0 | 0.3 | 0.0 |
| **Total** | **8.3** | **0.0** | **4.0** | **0.0** | **3.6** | **0.0** | **2.5** | **0.0** |
| ***Caligus*** | **2.9** | **0.0** | **0.7** | **0.1** | **3.0** | **0.0** | **0.5** | **0.0** |

Thus, the imidacloprid treatment is effective in the field against *L. salmonis* and *Caligus* sp. of sea lice.

### Example 5 - Timescale of effect of imidacloprid against sea lice

To determine the timescale of the effect of imidacloprid, salmon infected with pre-adult and adult sea lice were removed from a stock tank and killed using a sharp blow to the head. Fish were suspended in 30 litres of water in the presence of 0, 20, 50, 100, 200 or 500 ppm imidacloprid, and sea lice were observed for 30-60 minutes to monitor whether and when they left their host.

For fish exposed to 0 ppm imidacloprid (negative controls), observations were made for 60 minutes. With the exception of a single fish exposed to 500 ppm imidacloprid that was observed for 60 minutes, all other treated fish were observed for 30 minutes. Three fish per treatment group were tested.

Observations on the time at which lice left the host, and the sex and stage of the sea louse was noted. Any lice that left the host were transferred to clean sea water immediately. Furthermore, any lice remaining on the host at the end of the exposure period were removed from the host and transferred to clean sea water.

Lice were observed both shortly after and approximately 2 hours after the end of the exposure period.

The ratio of male to female sea lice was around 50:50. The water temperature was around 12°C.

Lice on dead fish held in untreated sea water did not leave the host over a sixty-minute observation period and showed normal movement once transferred to Petri dishes. These movements included swimming and typical, controlled movement of appendages.

Shortly imidacloprid was administered, lice were observed to undergo two noticeable changes - firstly, the lateral margins of the carapace were pulled inwards to give the lice a hunchback appearance and in so doing, raising the underside of the louse off the fish, and secondly, the abdomen of affected individuals were raised at an angle of approximately 45° relative to the fish surface.

Prior to leaving the host, lice generally became very active, moving over the surface of the fish, often in a circular pattern. Once they left the fish they moved in a wide spiral, downward motion before becoming immobile on the bottom of the test tank.

In groups exposed to between 20 and 200 ppm imidacloprid, around 50% of the lice left the host within the first 15 minutes. In fish exposed to 500 ppm imidacloprid, around 70% of the lice left the host within the first 9 minutes. The remaining lice stayed on the host until the end of the exposure period. Lice on the host underwent lateral compression of the carapace during treatment giving rise to a hunchback appearance of the lice.

Thus, the majority of sea lice left a treated host within 15 minutes.

Male lice appeared to be more likely to leave the host compared with females. Lice exposed to imidacloprid typically showed total loss of motility and rapid twitching of appendages. Female lice showed fewer movements of the appendages compared with males but did show peristaltic movements of the gut compared with males.

### - Observations of lice off host (in clean sea water)

Negative control - Lice exposed to no imidacloprid showed behaviours typical of lice removed from their host. This included active swimming and peristaltic motion of the gut. Movement of appendages were considered methodical and controlled. Lice were reactive to physical stimulus, actively moving away.

20 ppm - Of the 49 lice exposed to 20 mg/L imidacloprid, two were considered dead at 30 minutes post-exposure (p.e.). When touched with a set of forceps, the lice fell off the side of the petri dish, turned upside down and swam for a short distance. However, swimming was erratic and appeared to be caused by the excessive movement of the majority of the appendages. The remaining lice were considered moribund with rapid twitching of their appendages including leg, second maxilla, and primary antenna. Peristalsis of the gut was noted in females exposed to 20 ppm imidacloprid for 30 minutes. Twelve out of 49 were deemed alive and responsive, actively swimming without stimulus. No lice exposed for 30 minutes showed signs of recovery.

50 ppm - Of the 21 lice exposed to 50 ppm imidacloprid, four were considered dead at 30 minutes. Twitching of major appendages were noted in remaining lice with the exception of peristalsis that was noted in two adult females exposed for 30 minutes. 14 lice examined at 2 hours p.e. were considered dead with no movement detected. Two individuals had twitches of a leg and four adult females showed peristaltic movement of the gut.

100 ppm - Of the 28 lice exposed to 100 ppm imidacloprid, four were considered dead at the end of the exposure period. Lice typically showed twitching of the secondary antennae and of the second maxilla. A further 11 lice showed peristaltic motions of the gut. Lateral compression of the carapace was noted in a number of individuals. At 2 hours p.e. 17/28 lice were considered dead. Peristaltic movement of the gut was noted in 9 out of 28 lice 2 hours p.e.; all were adult females. Finally, an antenna of one louse and leg 4 of another louse showed limited twitch movements at 2 hours p.e.

200 ppm - Of the 26 lice exposed to 200 ppm imidacloprid, four were considered dead at the end of the exposure period. The remaining lice were typically motionless apart from twitching of the secondary antenna, and peristaltic motion of the gut was noted in four adult female lice. Twitching of the anus of one louse was noted at 30 mins p.e. Six lice were considered dead 2 hours post-exposure. Furthermore, limited twitching was recorded in the remaining animals and consisted mainly of twitching of primary and secondary antennae and peristalsis of the gut in 3 adult females.

500 ppm - Six out of 20 lice were considered dead 30 minutes p.e. Of these, two were recorded as showing gut peristalsis or minor twitching 2 hours later. The remaining lice examined at 30 mins p.e. were typified by rapid twitching of the first and second antenna, with some twitching of the maxillipeds and peristaltic movement of the gut in 4 individuals. At 2 hours p.e., 15/20 lice were considered dead. Three lice showed twitching of the secondary antennae and gut peristalsis was recorded in two lice.

### Example 6 - Comparison with azamethiphos and deltamethrin on isolated sea lice

Both pre-adult and adult stages (mobile stages) of both sexes were used, and they were equally distributed among groups. The sea lice were exposed to imidacloprid for 60 minutes, azamethiphos for 60 minutes and deltamethrin for 30 minutes in one litre baths at a range of concentrations (Tables 6, 7 and 8). The sea lice were transferred to clean aerated seawater after treatment. The temperature of the seawater during the experiment was 12°C, but during exposure the temperature raised to approx. 14°C in regimes exposed for 60 min. (imidacloprid and azamethiphos) and to 13°C for the regime exposed in 30 minutes (deltamethrin).

The numbers of live and immobilised (including killed) lice in each regime were registered approximately 20 h after end of exposure. Each louse was individually investigated.

The proportional effect of imidacloprid, azamethiphos and deltamethrin in this *in vitro* test is shown in Tables 6, 7 and 8.

**Table 6 - effect of imidacloprid on sea lice**

| **Dose (ppm)** | **Live** | **Immobilised** | **% effect** |
|---|---|---|---|
| 0 | 9 | 0 | 0 |
| 0 | 11 | 0 | 0 |
| 5 | 7 | 3 | 30 |
| 5 | 7 | 3 | 30 |
| 10 | 5 | 5 | 50 |
| 10 | 6 | 4 | 40 |
| 15 | 0 | 10 | 100 |
| 15 | 0 | 10 | 100 |
| 20 | 0 | 10 | 100 |
| 20 | 0 | 10 | 100 |
| 30 | 0 | 10 | 100 |
| 30 | 0 | 10 | 100 |

**Table 7 - effect of azamethiphos on sea lice**

| **Dose (ppm)** | **Live** | **Immobilised** | **% effect** |
|---|---|---|---|
| 0 | 11 | 0 | 0 |
| 0 | 11 | 0 | 0 |
| 5 | 10 | 0 | 0 |
| 5 | 10 | 0 | 0 |
| 10 | 9 | 1 | 10 |
| 10 | 9 | 1 | 10 |
| 15 | 10 | 0 | 0 |
| 15 | 10 | 0 | 0 |
| 20 | 9 | 1 | 10 |
| 20 | 8 | 2 | 20 |
| 30 | 9 | 1 | 10 |
| 30 | 6 | 4 | 40 |

**Table 8 - effect of deltamethrin on sea lice**

| **Dose (ppm)** | **Live** | **Immobilised** | **% effect** |
|---|---|---|---|
| 0 | 10 | 0 | 0 |
| 0 | 11 | 0 | 0 |
| 5 | 10 | 0 | 0 |
| 5 | 10 | 0 | 0 |
| 10 | 10 | 0 | 0 |
| 10 | 9 | 2 | 18.2 |
| 15 | 8 | 2 | 20 |
| 15 | 9 | 1 | 10 |
| 20 | 8 | 2 | 20 |
| 20 | 9 | 1 | 10 |
| 30 | 10 | 1 | 9.1 |
| 30 | 8 | 2 | 20 |

The estimated EC₅₀ value for imidacloprid was 7.6 ppm, and the estimated EC₉₀ value for imidacloprid was 14.4 ppm. The EC₅₀ and EC₉₀ values for azamethiphos and deltamethrin were not calculated.

### Example 7 - Concentration- and time-dependence of imidacloprid treatment in vivo

To determine the concentration- and time-dependence of imidacloprid treatment *in vivo,* Atlantic salmon (average of 320.9 g) were challenged with imidacloprid in seawater (32.5‰ salinity) at 12°C. The water level in the tank was lowered and aeration was employed during administration of the active. The salmon louse copepodid culture was counted and adjusted to obtain a target level of around 40 copepodids per fish in the challenge tank at each challenge time point.

Salmon lice on the fish were counted using standard methods. Only lice on the fish's outer surface, not including gills and oral/buccal cavities, were investigated.

Numbers of dissociated lice in tank water or attached to the tank walls were recorded. Lice in the tank water were collected and assessed for ability to attach by suction to a smooth plastic surface immediately after treatment and again after 30-60 minutes (to assess possible revival). Live and viable lice were also collected from the mock-treated control groups for reference and held in revival chambers for the same period of time to assess the system.

Fish behaviour/appearance was assessed *in vivo* during each test. Any changes in behaviour and/or appearance including mortality were recorded. No fish died in the trial and no autopsy was performed.

The test solutions of the active were prepared (added and homogenised with seawater) and administered to a treatment volume of 40 litres.

Three sea lice-infected fish from the holding tank were randomly gathered and carefully steered into a barrel forming an inner compartment (diameter = 34.5-40 cm; height = 54 cm) that was submerged in the tank and in which the base has been replaced with a plastic mesh screen with 9 mm² square holes.

The fish were transferred to the inner compartment within 3 minutes of each test start. The inner compartment was suspended/submerged in the holding tank pending treatment. Treatments and mock treatments were implemented by draining the inner compartment with fish and transferring it to a barrel containing the test solution. Treatments/mock treatments were performed in static water with aeration/oxygenation. Aeration was adjusted to set the oxygen saturation to 70-100%.

To terminate the treatment, the inner compartment with treated fish was lifted to the surface and drained, then fish were transferred directly and without water to a second basin with a lethal overdose of anaesthetic and left until dead. All lice remaining on these fish and lice that fell off in the anaesthetic bath were recorded.

Remaining lice in the treatment bath were strained through a plankton mesh (2 mm pore size) that was suspended in a water bath with clean seawater. The lice in this collector were transferred to a plastic beaker (1 litre) and then again into a revival tube (5 cm diameter; 10 cm length). Lice that are able to attach to the walls of the treatment tanks or beaker within 3 minutes of completion of each test were scored as viable. Lice that did not attach to the wall were monitored for 30-60 minutes in the revival tube. Lice that appeared to be viable in the revival tubes after 30-60 minutes and those that did not were scored in separate categories.

Mock treatment controls were carried in a similar manner.

Each fish had an average of 11 lice per fish before treatment. Exposure times with imidacloprid ranged from 3 to 60 minutes, and doses ranged from 20 ppm to 200 ppm.

No fish died in the trial.

Table 9 show the percent lice removed from fish by imidacloprid treatment.

**Table 9 - Results of bath treatments with imidacloprid**

| **Dose (ppm)** | **Treatment duration (minutes)** | | | | |
|---|---|---|---|---|---|
| | 3 | 5 | 15 | 30 | 60 |
| 0 (control) | 0²⁴/0¹⁶ | - | - | - | 0¹⁸/7.3²³ |
| 20 | - | - | - | 63.9³⁶ | 74.1²⁷ |
| 50 | - | - | - | 91.3²³ | - |
| 100 | 7.0⁴³ | - | 73.7³⁸ | - | - |
| 200 | - | 55.9³⁴ | 91.5⁴⁷ | - | - |

Table 9 shows percentage lice removed from fish after treatment relative to total numbers of lice. Negative control groups at 3- and 60 minutes were duplicated. Superscript numbers denote the total number of lice on the 3 fish in each test.

Thus, imidacloprid was effective at removing lice using time periods of treatment.

Table 10 shows the percentage of the sea lice that became detached from the fish by the treatment, and of the sea lice that remain attached during treatment but were subsequently collected, which remained active at 30-60 minutes after treatment.

**Table 10 - revival rates of sea lice**

| **Test regime** | **% of lice that were active at 30-60min. post-treatment** | | | |
|---|---|---|---|---|
| | **Detached lice collected from tank water** | | **Attached lice collected from fish** | |
| | **n lice** | **% active** | **n lice** | **% active** |
| Control 3 min | 0 | NA | 0 | NA |
| Control 3 min | 0 | NA | 26 | 7.7 |
| Control 60 min | 0 | NA | 0 | NA |
| Control 60 min | 3 | 0.0 | 16 | 50.0 |
| Imidacloprid 20 ppm 30 min | 23 | 4.3 | 9 | 11.1 |
| Imidacloprid 20 ppm 60 min | 20 | 0.0 | 0 | NA |
| Imidacloprid 50 ppm 30 min | 31 | 0.0 | 0 | NA |
| Imidacloprid 100 ppm 3 min | 3 | 33.3 | 0 | NA |
| Imidacloprid 100 ppm 15 min | 28 | 0.0 | 0 | NA |
| Imidacloprid 200 ppm 5 min | 13 | 0.0 | 13 | 0.0 |
| Imidacloprid 200 ppm 15 min | 43 | 0.0 | 0 | NA |

Thus, the sea lice respond to imidacloprid by becoming detached. Some of the treated sea lice appear to remain viable. Potentially viable detached (and dead) sea lice are removed using filtration of the treatment water.

By way of comparison, fish infected with sea lice from the same sources were treated with azamethiphos at 0.1 mg/l and deltamethrin at 0.2 µl/l for 30 minutes, per the recommended dosage regimes. Treatments were carried out under similar conditions as those treated with imidacloprid. A mock-treatment control was also administered. Each treatment condition was administered in duplicate. The results of this comparative study are shown in Table 11.

**Table 11 - Results of bath treatments with azamethiphos and deltamethrin**

| **Compound** | **% Removal** |
|---|---|
| Control 1 | 0²⁹ |
| Control 2 | 0⁴² |
| Deltamethrin 1 | 0³⁷ |
| Deltamethrin 2 | 0³⁷ |
| Azamethiphos 1 | 3.8⁵² |
| Azamethiphos 2 | 3.0³³ |

Table 11 shows percentage lice removed from fish after treatment relative to total numbers of lice. Superscript numbers denote the total number of lice on the 3 fish in each test.

Thus, sea lice substantially remain attached to the fish in response to deltamethrin or azamethiphos, by contrast to the effect seen with imidacloprid in which sea lice become detached from the fish.

### Example 8 - Safety of imidacloprid

The safety of the imidacloprid treatment on fish was assessed. Fish held in a flow through tank containing 271.8 L of sea water were exposed to 65 ppm w/v of the active ingredient imidacloprid. 17.67 g of imidacloprid was dissolved in 100 ml of dimethyl sulfoxide (DMSO) and the solution was added to approximately 900 ml sea water and mixed. The flow on the through tank was disabled and the solution of imidacloprid was added.

The fish were exposed to 65 ppm imidacloprid in static water for 1 hour and observed for behavioural changes at 5-10 minute intervals. The fish were then held for a further 7 days before being terminated. No observable changes in fish behaviour were noted during the exposure period. Fish were monitored for a further 7 days with no adverse reactions being noted. On termination, no external pathologies were noted.

## Claims

1. A neonicotinoid for use in removing ectoparasites from a fish in water,
wherein, after removal of the ectoparasites from the fish, the water comprising the removed ectoparasites is exchanged with replacement water, thereby separating the removed ectoparasites and the fish,
wherein the ectoparasites are sea lice, and
wherein the neonicotinoid is not configured or formulated for in-feed administration.

2. The neonicotinoid for use according to claim 1, wherein the ectoparasite is in a motile lifecycle stage.

3. The neonicotinoid for use according to claim 1, wherein the neonicotinoid is administered to the fish at a concentration of 1 - 500 ppm, 1 - 200 ppm, 20 - 200 ppm, 1 - 64 ppm, 10 - 64 ppm, 10 - 50 ppm, 50 ppm or more, 100 ppm or more, or 200 ppm or more w/v.

4. The neonicotinoid for use according to any one preceding claim, wherein the fish is a salmon, trout, char, or cleaner fish.

5. The neonicotinoid for use according to any one preceding claim, wherein the neonicotinoid is applied at a sublethal dose and/or for a sublethal time.

6. The neonicotinoid for use according to any one preceding claim, wherein the neonicotinoid is the only ectoparasiticide administered.

7. The neonicotinoid for use according to any one preceding claim, wherein the neonicotinoid is imidacloprid, clothianidin, acetamiprid, nitenpyram, nithiazine, thiacloprid or thiamethoxam, or the pharmaceutically effective salts or esters thereof.

8. The neonicotinoid for use according to any one preceding claim, wherein after the water is exchanged, the release of the removed ectoparasites into the environment is prevented.

9. The neonicotinoid for use according to claim 8, wherein preventing release of the removed ectoparasites comprises collecting the ectoparasites from a sample of water comprising the removed ectoparasites.

10. The neonicotinoid for use according to any one preceding claim, further comprising killing removed ectoparasites that remain alive, after optionally concentrating the ectoparasites.

11. A composition for use in treating an ectoparasite infestation in a fish comprising one or more ectoparasiticides, wherein one of the one or more ectoparasiticides is the neonicotinoid for use according to any one preceding claim.

12. The composition for use according to claim 11, wherein the composition comprises only one ectoparasiticide.

## Patentansprüche

1. Ein Neonicotinoid zur Verwendung beim Entfernen von Ektoparasiten von einem Fisch in Wasser,
wobei nach dem Entfernen der Ektoparasiten von dem Fisch das Wasser, das die entfernten Ektoparasiten beinhaltet, durch Ersatzwasser ausgetauscht wird, wodurch die entfernten Ektoparasiten und der Fisch getrennt werden,
wobei die Ektoparasiten Seeläuse sind, und
wobei das Neonicotinoid nicht zur Verabreichung über das Futter konfiguriert oder formuliert ist.

2. Neonicotinoid zur Verwendung gemäß Anspruch 1, wobei sich der Ektoparasit in einer motilen Lebenszyklusphase befindet.

3. Neonicotinoid zur Verwendung gemäß Anspruch 1, wobei das Neonicotinoid dem Fisch in einer Konzentration von 1-500 ppm, 1-200 ppm, 20-200 ppm, 1-64 ppm, 10-64 ppm, 10-50 ppm, 50 ppm oder mehr, 100 ppm oder mehr oder 200 ppm oder mehr Gew./Vol. verabreicht wird.

4. Neonicotinoid zur Verwendung gemäß einem der vorhergehenden Ansprüche, wobei der Fisch ein Lachs, eine Forelle, ein Seesaibling oder Putzerfisch ist.

5. Neonicotinoid zur Verwendung gemäß einem der vorhergehenden Ansprüche, wobei das Neonicotinoid in einer subletalen Dosis und/oder für eine subletale Zeit angewendet wird.

6. Neonicotinoid zur Verwendung gemäß einem der vorhergehenden Ansprüche, wobei das Neonicotinoid das einzige verabreichte Ektoparasitizid ist.

7. Neonicotinoid zur Verwendung gemäß einem der vorhergehenden Ansprüche, wobei das Neonicotinoid Imidacloprid, Clothianidin, Acetamiprid, Nitenpyram, Nithiazin, Thiacloprid oder Thiamethoxam oder die pharmazeutisch wirksamen Salze oder Ester davon ist.

8. Neonicotinoid zur Verwendung gemäß einem der vorhergehenden Ansprüche, wobei, nachdem das Wasser ausgetauscht ist, die Freigabe der entfernten Ektoparasiten in die Umwelt verhindert wird.

9. Neonicotinoid zur Verwendung gemäß Anspruch 8, wobei das Verhindern der Freigabe der entfernten Ektoparasiten das Sammeln der Ektoparasiten aus einer Probe von Wasser, die die entfernten Ektoparasiten beinhaltet, beinhaltet.

10. Neonicotinoid zur Verwendung gemäß einem der vorhergehenden Ansprüche, das ferner das Abtöten entfernter Ektoparasiten beinhaltet, die lebendig bleiben, nachdem die Ektoparasiten optional konzentriert werden.

11. Eine Zusammensetzung zur Verwendung beim Behandeln eines Ektoparasitenbefalls in einem Fisch, der ein oder mehrere Ektoparasitizide beinhaltet, wobei eines des einen oder der mehreren Ektoparasitizide das Neonicotinoid zur Verwendung gemäß einem der vorhergehenden Ansprüche ist.

12. Eine Zusammensetzung zur Verwendung gemäß Anspruch 11, wobei die Zusammensetzung nur ein Ektoparasitizid beinhaltet.

## Revendications

1. Un néonicotinoïde pour son utilisation dans l'élimination d'ectoparasites d'un poisson dans l'eau,
dans lequel, après élimination des ectoparasites du poisson, l'eau comprenant les ectoparasites éliminés est changée pour de l'eau de remplacement, séparant dès lors les ectoparasites éliminés et le poisson,
dans lequel les ectoparasites sont des poux de mer, et
dans lequel le néonicotinoïde n'est pas configuré ni préparé pour une administration dans l'alimentation.

2. Le néonicotinoïde pour l'utilisation selon la revendication 1, dans lequel l'ectoparasite est à un stade motile de son cycle de vie.

3. Le néonicotinoïde pour l'utilisation selon la revendication 1, le néonicotinoïde étant administré au poisson à une concentration de 1 à 500 ppm, 1 à 200 ppm, 20 à 200 ppm, 1 à 64 ppm, 10 à 64 ppm, 10 à 50 ppm, 50 ppm ou plus, 100 ppm ou plus, ou 200 ppm ou plus en p/v.

4. Le néonicotinoïde pour l'utilisation selon une quelconque revendication précédente, dans lequel le poisson est un saumon, une truite, un omble, ou un poisson nettoyeur.

5. Le néonicotinoïde pour l'utilisation selon une quelconque revendication précédente, le néonicotinoïde étant appliqué a une dose sublétale et/ou pendant une durée sublétale.

6. Le néonicotinoïde pour l'utilisation selon une quelconque revendication précédente, le néonicotinoïde étant le seul ectoparasiticide administré.

7. Le néonicotinoïde pour l'utilisation selon une quelconque revendication précédente, le néonicotinoïde étant l'imidaclopride, la clothianidine, l'acétamipride, le nitenpyrame, la nithiazine, le thiaclopride ou le thiaméthoxame, ou les sels ou esters pharmaceutiquement efficaces de ceux-ci.

8. Le néonicotinoïde pour l'utilisation selon une quelconque revendication précédente, dans lequel après que l'eau est changée, le rejet dans l'environnement des ectoparasites éliminés est empêché.

9. Le néonicotinoïde pour l'utilisation selon la revendication 8, dans lequel le fait d'empêcher le rejet des ectoparasites éliminés comprend le fait de récolter les ectoparasites dans un échantillon d'eau comprenant les ectoparasites éliminés.

10. Le néonicotinoïde pour l'utilisation selon une quelconque revendication précédente, comprenant en outre le fait de tuer des ectoparasites éliminés qui sont encore vivants, après avoir facultativement concentré les ectoparasites.

11. Une composition pour son utilisation dans le traitement d'une infestation ectoparasitaire chez un poisson comprenant un ou plusieurs ectoparasiticides, dans laquelle un des un ou plusieurs ectoparasiticides est le néonicotinoïde pour l'utilisation selon une quelconque revendication précédente.

12. La composition pour l'utilisation selon la revendication 11, la composition comprenant seulement un ectoparasiticide.
